# FASCICULE DE BREVET EUROPEEN

(11) **EP 2 258 827 B1**
(45) Date de publication et mention de la délivrance du brevet: **29.05.2013**
(21) Numéro de dépôt: 10290288.9
(22) Date de dépôt: 03.06.2010
(51) Int. Cl.: C12C 1/10, C12C 1/15

(54) **Procédé et dispositif de touraillage**
Verfahren und Vorrichtung zum Darren
Kilning device and method

(30) Priorité: 04.06.2009 FR 0902695
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- EP-A2- 0 714 979
- EP-A2- 1 055 462
- WO-A1-03/068903
- WO-A1-2005/005592
- DE-A1- 2 101 848
- DE-A1- 2 163 134
- DE-A1- 2 847 458
- DE-C1- 3 407 685
- US-A- 3 704 011
- US-A- 4 886 759

## Description

L'invention concerne le domaine technique de la malterie.

Il s'agit de reproduire le développement naturel de germination d'une céréale, afin que celle-ci développe certains enzymes (notamment l'amylase, la protéase). Comme céréale on utilise généralement de l'orge, ou encore du seigle, du blé, du sorgho ou de l'épeautre. Le maltage comprend le traitement de la céréale par une succession d'opérations (notamment : trempage - germination - touraillage - dégermage), après quoi on obtient du malt. Il existe de gros besoins en malt de différentes propriétés et qualités, notamment pour la brasserie.

Les principes généraux du maltage sont quasi ancestraux. On en trouve une synthèse dans l'ouvrage "Malterie et brasserie", de Jean SUNIER, 2ème édition, imprimerie La Concorde, Lausanne, 1968, ou encore dans sa réédition plus récente sous le nouveau titre "La Fabrication de la bière", Alliage éditeur, 26 septembre 2007, ISBN-13 No 978-2921327602.

DE 2 847 458 divulgue un dispositif de touraillage grains germés.

Aujourd'hui, le maltage est industriel, et réalisé de plus en plus dans des installations appelées malteries. L'un des buts d'une malterie est de mettre en place une installation automatisée qui procure un excellent rendement en termes qualitatifs, tout en cherchant à réduire les nombreux coûts d'investissement et de fonctionnement de cette industrie: emprise de terrain, génie civil de construction, besoins en énergie, notamment.

De façon générale, une telle installation peut comporter au moins un outil de trempage, au moins un germoir et au moins une touraille, avec un système de transport de l'un à l'autre, dans l'ordre. Le nettoyage de la touraille s'avère lent, pénible et fastidieux.

Selon un aspect de l'invention, un dispositif de touraillage de grains germés comprend une cuve à grains germés comportant un fond muni d'ouvertures d'aération et d'un orifice de déchargement, une chambre de ventilation disposée sous la cuve, un transporteur disposé sous la chambre de ventilation pour recueillir les grains germés lors du déchargement de la cuve par ledit orifice, et un mécanisme de nettoyage de la chambre de ventilation pourvu de goulottes sensiblement parallèles formant le fond de la chambre de ventilation, de vis transporteuses montées dans les goulottes, les vis étant entraînées par le transporteur dans un sens amenant des débris tombés dans une goulotte vers le transporteur, le transporteur étant monté traversant dans la chambre de ventilation pour évacuer lesdits débris lors d'un nettoyage de la chambre de ventilation.

Selon un autre aspect de l'invention, un procédé de nettoyage d'un dispositif de touraillage de grains germés comprenant une cuve à grains germés comportant un fond muni d'ouvertures d'aération et d'un orifice de déchargement, la chambre de ventilation disposée sous la cuve, un transporteur disposé sous la chambre de ventilation pour recueillir les grains germés lors du déchargement de la cuve par ledit orifice, comprend l'actionnement des vis transporteuses montées dans des goulottes parallèles formant le fond de la chambre de ventilation, par le transporteur dans un sens amenant des débris tombés dans une goulotte vers le transporteur, le transporteur étant monté traversant dans la chambre de ventilation pour évacuer lesdits débris. Ceci réduit considérablement la durée et la pénibilité du nettoyage, notamment de la chambre de ventilation.

D'autres caractéristiques et avantages de l'invention apparaîtront à l'examen de la description détaillée ci-après, et des dessins annexés, sur lesquels :
- la figure 1 est, en vue de dessus, un schéma d'implantation pour un mode de réalisation particulier d'une installation de maltage,
- la figure 2 est, en vue perspective, un schéma de principe de l'implantation des convoyeurs,
- la figure 3 est, en vue de dessus, un schéma d'implantation pour un mode de réalisation particulier d'une touraille,
- la figure 4 est, en coupe selon IV-IV, un schéma d'implantation pour un mode de réalisation particulier d'une touraille,
- la figure 5 est, en coupe selon V-V, un schéma d'implantation pour un mode de réalisation particulier d'une touraille,
- la figure 6 est, en coupe transversale, un schéma de détail d'implantation pour un mode de réalisation particulier d'un transporteur de sortie de touraille,
- la figure 7 est, en coupe longitudinale, un schéma d'implantation pour un mode de réalisation particulier d'une goulotte,
- la figure 8 est, en coupe transversale, un schéma de détail d'implantation pour un mode de réalisation particulier d'un transporteur de sortie de touraille,
- la figure 9 est une vue détail de la figure 7, et
- la figure 10 est une vue de détail de la chaîne.

Les dessins annexés pourront non seulement servir à compléter l'invention, mais aussi contribuer à sa définition, le cas échéant.

Il est fait référence aux ouvrages "Malterie et brasserie" et/ou "La Fabrication de la bière", déjà cités, pour acquérir au besoin une connaissance générale des installations de malterie. Le maltage réalisé en malterie fait appel à des techniques complexes, et les éléments connus de l'homme du métier ne seront pas décrits en détail ici, en dehors de ce qui est directement nécessaire.

La suite de la présente description est faite en référence à l'orge en tant que céréale.

Abstraction faite des tâches d'intendance comme le stockage des grains d'orge, le processus de maltage comprend au moins les étapes suivantes:
a) Un trempage des grains d'orge. Celui-ci peut se faire dans différentes sortes de cuves de trempage, que l'on appellera génériquement "outil de trempage".
b) La germination, qui s'effectue dans des germoirs susceptibles de plusieurs modes de réalisation, notamment en raison de leur forme, qui peut être circulaire, ou au contraire semblable à un rectangle allongé. Après cette étape l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en le retournant et/ou l'égalisant avec un bras radial. Après cette étape l'orge est qualifiée de malt.
d) Le dégermage, qui consiste à éliminer les radicelles de l'orge.

On donnera maintenant quelques indications générales typiques sur ces différentes étapes. Les grains de céréale sont tout d'abord soigneusement nettoyés. Le but principal du trempage est de porter le grain à une teneur en eau proche de 50 %, typiquement entre 40 et 45 %. Il est bon aussi de lui apporter de l'oxygène, de sorte que la germination soit tout juste initiée ou sur le point de l'être en sortie de trempage.

On utilise la trempe alternée ou discontinue, avec des alternances de période pendant lesquelles le grain est sous l'eau, et d'autres (de durée environ moitié) où le grain est à découvert.

La température de l'eau est typiquement de 12 à 15°C, voir 20°C avec alternance d'eau froide. Le maximum est autour de 35°C, où le grain risque de mourir. Différents additifs peuvent être prévus pour empêcher la fermentation et le développement de micro-organismes pendant le trempage.

La germination se fait en plaçant un lit de grains trempés sur une grille fine, traversée par un flux d'air sous température, pression et humidité contrôlées, avec brassage des grains à l'aide de vis sans fin verticales plongeant dans le lit, et entraînées par des moteurs, l'ensemble étant par exemple monté sur un chariot mobile qui parcourt le germoir. Ce chariot serait un bras pour un germoir circulaire. Pour un germoir rectangulaire, il s'agit d'un chariot mobile sur la longueur. Le mouvement des vis sans fin et la vitesse de déplacement du chariot sont sous contrôle.

On en vient maintenant au touraillage. Là aussi, cette opération s'effectue sur une grille, sur laquelle les grains sont posés. Il s'agit de les faire sécher pour stopper la germination, tout en gardant le mieux possible les propriétés désirées du malt. Comme son nom l'indique, le touraillage s'effectue en principe sur une plate-forme circulaire mise d'une grille traversée par de l'air chaud, également sous température, pression et humidité contrôlées. Un bras de niveau réglable verticalement peut être muni de vis sans fin plongeant dans le lit de grains, afin de tendre à l'homogénéiser verticalement ou d'une vis d'axe horizontal pour l'égalisation, le chargement et le déchargement, ou encore de pales fixes ou réglables. La vitesse de rotation de la ou des vis sans fin et le sens et la vitesse angulaire d'avancée du bras sont également contrôlées. Le temps de séjour des grains est également contrôlé.

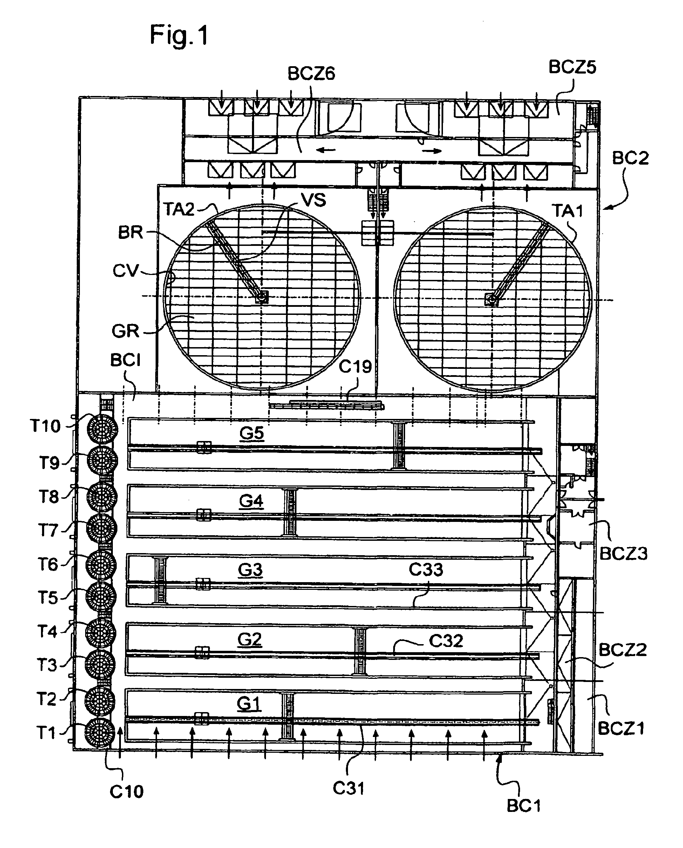

La figure 1 illustre un mode de réalisation des installations. Elle fait apparaître à droite un premier corps de bâtiment BC1, et à gauche un second corps de bâtiment BC2. Dans le corps de bâtiment BC1 sont implantés plusieurs, ici cinq, germoirs G1 à G5. Dans le même corps de bâtiment, en bout des germoirs, ici au-dessous, sont implantés plusieurs, ici dix, cuves de trempage TR1 à TR10. Ici, les cuves de trempage sont disposées par paire au bout de chacun des germoirs, d'où une réduction de la surface couverte, du nombre de bâtiments et la possibilité d'utiliser un même convoyeur pour déplacer le grain d'un outil de trempage vers un germoir et pour déplacer le malt vert d'un germoir vers une touraille, à des moments différents.

Dans le second corps de bâtiment BC2 sont prévus deux tourailles TA1 et TA2. On peut réutiliser de l'air de sortie d'une touraille dans la touraille voisine, d'où une réduction de la consommation d'énergie en chauffage et en ventilation. En outre, l'air de sortie de la deuxième touraille présente à certains moments de fonctionnement un taux de saturation en vapeur d'eau plus élevé d'où une capacité calorique accrue et une meilleure récupération d'énergie dans des échangeurs de chaleur.

Des zones de service sont prévues adjacentes à la partie supérieure du corps de bâtiment BC1, en BCZ1, BCZ2 et BCZ3.

D'autres zones de service sont prévues en BCZ5 et BCZ6. Elles servent essentiellement à récupérer le fluide gazeux utilisé au touraillage, qui traverse dans cet exemple la touraille de bas en haut, et se voit donc récupéré vers la gauche de la figure 1.

Des installations de sous-sols, non représentées, permettent d'élaborer l'atmosphère gazeuse requise, d'une part, pour la germination, d'autre part, pour le touraillage, ainsi que l'air requis pour les cuves de trempage lors de phases de respiration du grain.

Sur la figure 1, on distingue un convoyeur C10 passant sous les cuves TA1 à TA 10, ainsi que la trace d'un convoyeur C 19 sur lequel on reviendra.

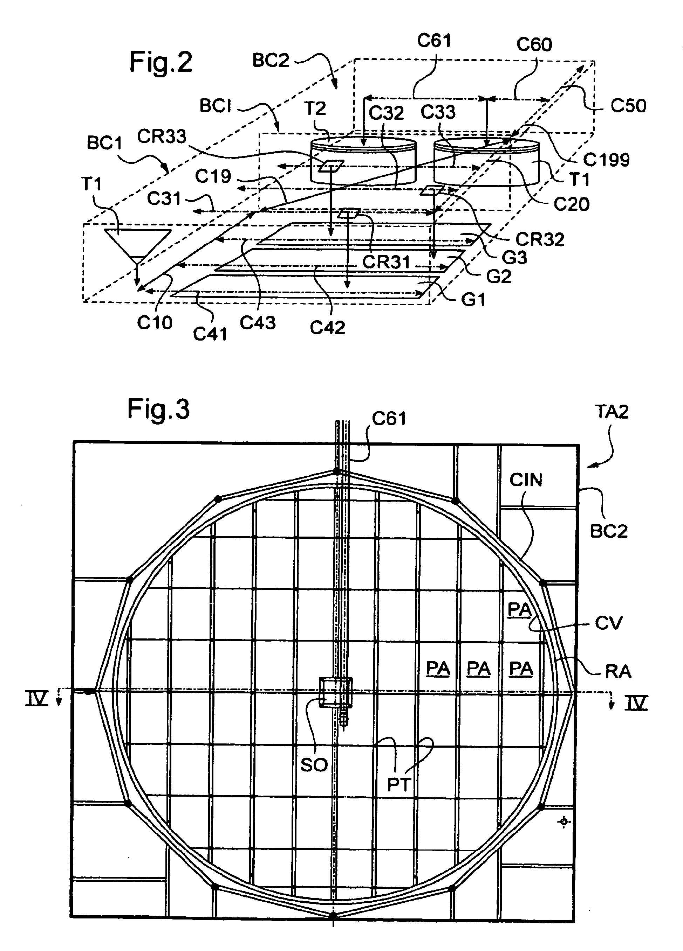

Il est maintenant fait référence à la figure 2, qui un schéma en perspective illustrant le cheminement des différents convoyeurs dans l'installation.

La disposition du bâtiment est définie sur la figure 2 par un trait pointillé fin et serré. On distingue à l'avant le corps de bâtiment BC 1 et à l'arrière le corps de bâtiment BC2. Entre ceux-ci apparaît une cloison verticale BC1, qui délimite les deux corps de bâtiment BC 1 et BC2.

Pour simplifier, une seule cuve de trempage TA1 est représentée, et de même seuls trois germoirs G1 à G3 sont représentés, au lieu des cinq de la figure 1.

Le convoyeur C10 passe sous les cuves de trempage telles que TA1, pour rejoindre la partie basse du convoyeur C19, qui est un convoyeur ascensionnel situé près de la cloison BCI. A son extrémité supérieure C199, le convoyeur C19 peut desservir soit le convoyeur C20, soir le convoyeur C50, tous deux étant horizontaux en partie haute des corps de bâtiment BC 1 et BC2, respectivement.

Du convoyeur C20, il part trois convoyeurs C31, C32 et C33, perpendiculaires au convoyeur C20. Les convoyeurs C31, C32 et C33 sont respectivement situés au-dessus des germoirs G1 à G3, sensiblement dans leur de symétrie longitudinale. La flèche C319 située à l'extrémité gauche du convoyeur C31 indique le grain trempé peut se déverser dans germoir G1. En fait, ce déversement peut se faire de manière commandée en n'importe quelle position du convoyeur C31 au-dessus du germoir G1, de sorte que l'on puisse remplir celui-ci de grains de manière sensiblement régulière. Les convoyeurs perpendiculaires C31, C32 et C33 sont munis d'un chariot CR31, CR32 et CR33 de déversement. Chaque chariot CR31, CR32 et CR33 est disposé le long du convoyeur correspondant et peut se déplacer continument ou entre des positions de travail prédéfinies. Chaque chariot CR31, CR32 et CR33 comprend des rouleaux inversant la concavité de la bande du convoyeur vue en section transversale, faisant ainsi tomber le grain. En d'autres termes, la bande présente en section courante une concavité vers le haut en forme de □, et au niveau du chariot une concavité vers le bas en forme de 1.

Le vidage des germoirs s'effectue par le bas. Les grains germés sont repris par des convoyeurs horizontaux C41, C42 et C43, pour les germoirs G1 à G3 respectivement.

A leur extrémité gauche, ces convoyeurs C41 à C43 rejoignent le convoyeur C10 déjà cité. Les grains germés sont transportés par ce convoyeur C10 jusqu'au convoyeur ascensionnel C19, pour retrouver cette fois le convoyeur supérieur C50, lequel est suivi d'un convoyeur perpendiculaire horizontal C60, pour alimenter la touraille TA1, sensiblement en son centre. Le grain peut également être repris par le convoyeur C61 pour alimenter la touraille TA2, sensiblement en son centre, au lieu de la touraille TA1.

Le schéma de principe qui précède comporte différentes jonctions et commutations de convoyeurs, sur lesquelles on reviendra par la suite. Dans le mode de réalisation représenté, les tourailles TA1 et TA2 comprennent une grille. Alternativement, les tourailles peuvent comprendre une pluralité de grilles superposées avec un mécanisme de descente des grains d'une grille vers une grille d'un niveau inférieur.

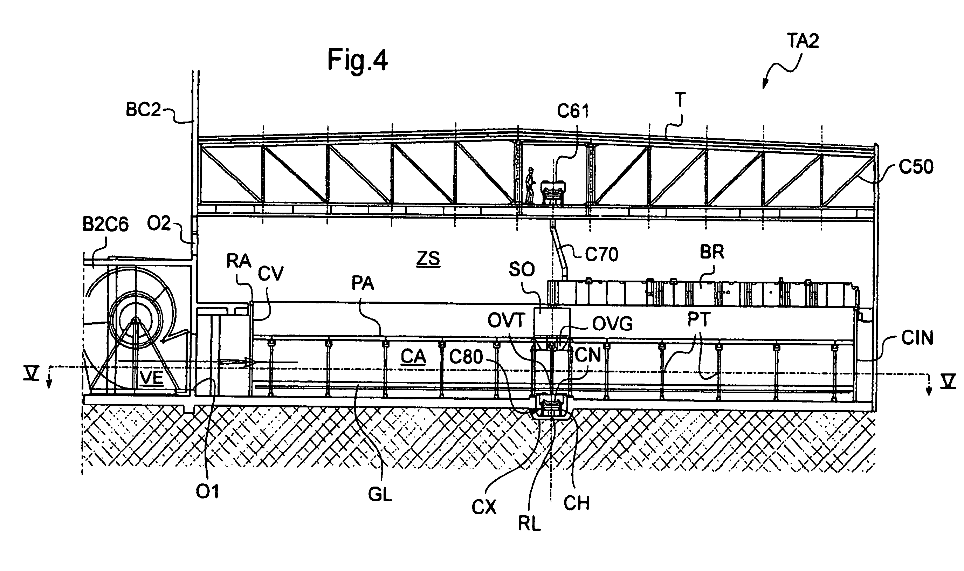

Dans le mode de réalisation des figures 3 à 5, la touraille TA2 disposée dans le bâtiment BC2 comprend une charpente intérieure CIN définissant un espace sensiblement cylindrique polygonal régulier d'axe vertical et une cuve CV disposée dans la charpente intérieure CIN. La cuve CV est disposée au dessus du fond FO du bâtiment BC2. Une grille GR ou plateau est disposée dans la cuve CV et en forme le fond. Une chambre de ventilation CA est délimitée verticalement entre le fond FO et la grille GR de la cuve CV et latéralement par la charpente intérieure CIN. La grille GR est sensiblement horizontale. La grille GR comprend une pluralité de panneaux PA de forme générale rectangulaire. Chaque panneau est muni d'ouvertures allongées configurées pour laisser passer l'air en retenant le grain. Les panneaux PA peuvent être formés à partir d'une tôle perforée ou à partir de barreaux, par exemple de barreaux soudés se croisant perpendiculairement. La touraille TA2 est alimentée par le convoyeur C60 et le convoyeur C61. Une extrémité du convoyeur C61 est disposée au dessus de la cuve CV.

Le grain apporté par le convoyeur C61 descend par une conduite C70 pour atteindre les panneaux PA du plateau à proximité du centre de la touraille TA2. Un bras rotatif BR est disposé dans la touraille TA2 au-dessus de la grille GR. Le bras BR est monté à rotation autour d'un axe vertical passant par le centre de la touraille TA2. La longueur du bras BR est très légèrement supérieure au rayon de la touraille TA2. Le bras BR est supporté au centre de la touraille TA2 par un socle SO reposant sur le sol par l'intermédiaire de poteaux PT. Les poteaux PT servent également à supporter la grille GR. L'extrémité opposée du bras BR repose sur un rail circulaire RA disposé autour de la grille GR.

Le bras BR est muni d'organes de répartition du grain permettant d'en disposer une épaisseur sensiblement régulière sur la grille GR, par exemple une vis sans fin VS d'axe sensiblement horizontal. Le bras BR supporte la vis radiale VS, voir figure 1. Plus précisément, le grain est déversé à proximité du socle SO par la conduite C70, puis étalé vers l'extérieur par les organes de répartition lors de la rotation du bras BR. Le bras BR est déplaçable en hauteur pour tenir compte de l'épaisseur de la couche de grains notamment. Les organes de répartition du grain peuvent être fixes par rapport au bras BR, le bras BR tournant dans un sens pour écarter le grain vers la périphérie lors du chargement et dans le sens opposé pour ramener le grain vers le centre lors du déchargement.

Les organes de répartition du grain peuvent comprendre des lames fixes par rapport au bras ou des mélangeurs motorisés, par exemple sous la forme de lames ou de vis rotatives, permettant de remuer le grain reposant sur la grille GR et de le répartir en épaisseur sensiblement uniforme. Les éléments de répartition supportés par le bras BR peuvent également être orientables entre une position de répartition homogène du grain lors du remplissage de la touraille et une position d'évacuation pour ramener le grain vers la sortie après que l'étape de touraillage a été effectuée.

Au-dessus de la touraille TA2, est installée une charpente supérieure CSU supportant la toiture T et les convoyeurs C60 et C61 disposés sous la toiture T. Les convoyeurs C60 et C61 peuvent être disposés dans un passage planchéié offrant un accès aux opérateurs.

Le touraillage proprement dit est effectué par une circulation d'air chaud, à température, humidité, pression et débit contrôlés. A cet effet, au moins un ou deux ventilateurs VE, par exemple de type centrifuge, sont installés au voisinage du bâtiment BC2 dans la zone de service BCZ6. Le ventilateur VE reçoit de l'air chauffé et humidifié, éventuellement additionné de composés de traitement du grain, par exemple pour éviter le développement de substances indésirables dans le grain. Le ventilateur VE débouche sous la grille GR par une ouverture O1 ménagée dans le mur du bâtiment BC2. L'air circule du ventilateur VE vers la zone inférieure ou chambre de ventilation CA de la touraille TA2, traverse la grille GR, traverse la couche de grain reposant sur la grille GR passe dans une zone supérieure ZS de la touraille TA2 au dessus de la cuve CV, puis est évacué par une ouverture 02 ménagée dans une partie supérieure du mur du bâtiment BC2. En sortie, l'air peut être relâché dans l'atmosphère, éventuellement après récupération d'énergie, par exemple par un échangeur de chaleur, ou envoyé vers la touraille TA1. Le ventilateur VE est à débit commandé permettant ainsi une excellente adaptation à la nature du grain et à l'évolution du grain au cours du touraillage.

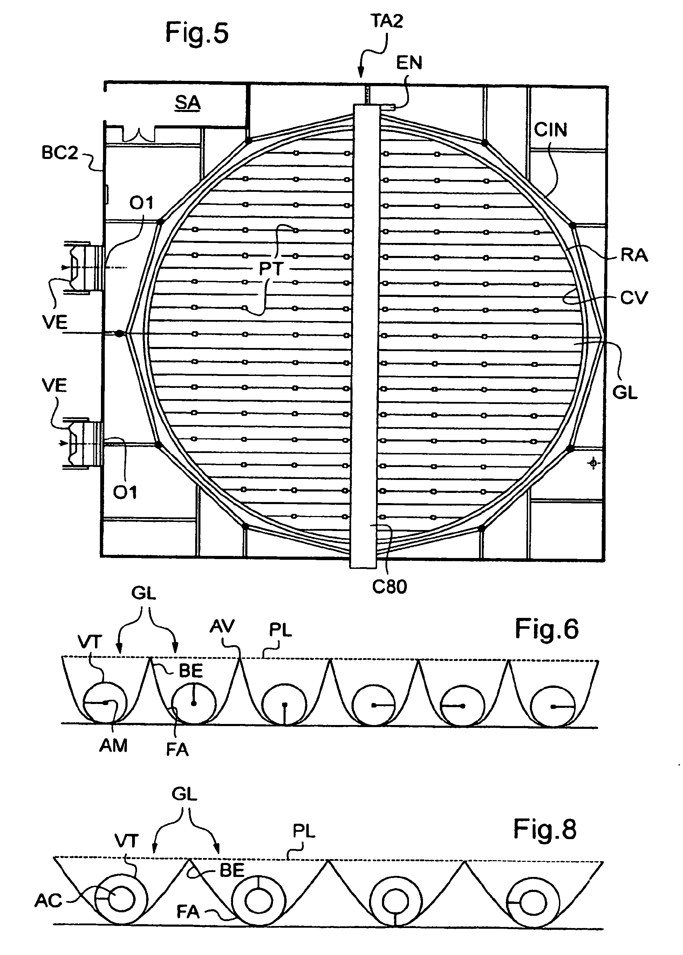

Un convoyeur C80 est disposé dans la chambre de ventilation CA de la touraille TA2 pour l'évacuation du grain après l'étape de touraillage. Le convoyeur C80 présente une longueur supérieure au diamètre de la touraille TA2, voir figure 5. En d'autres termes, les extrémités du convoyeur C80 disposées diamétralement dans la touraille TA2 sont disposées à l'extérieur de la touraille TA2 et de la charpente intérieure CIN. Le convoyeur C60 comprend une chaîne transporteuse CN sans fin, par exemple en acier inoxydable avec racleurs en matériau synthétique, un châssis CH par exemple à base d'acier inoxydable, des rouleaux RL pour la course de retour, et un entraînement EN.

L'entraînement EN peut comprendre un moteur électrique en prise directe avec un rouleau d'extrémité de la chaîne transporteuse ou par l'intermédiaire d'un réducteur. L'entraînement EN est disposé à une extrémité du convoyeur C80 en dehors de la touraille TA2. L'entraînement EN est ainsi aisément accessible aux opérateurs, y compris pendant l'opération de touraillage, d'où une surveillance et une maintenance aisées. Par ailleurs, l'entraînement EN extérieur à la touraille TA2 peut être optimisé en vue d'une fiabilité élevée et/ou d'une consommation d'énergie faible au lieu d'être optimisée en vue de satisfaire aux exigences des normes relatives aux atmosphères explosives obligatoires à l'intérieur de la touraille TA2. En outre, les rouleaux d'extrémité soumis à l'effort de tension de la chaîne transporteuse, subissent une usure et présentent un risque d'échauffement supérieur à ceux de la section courante supportant le retour de la chaîne transporteuse. La disposition des rouleaux d'extrémités hors de la touraille TA2 permet également une surveillance et une maintenance aisées.

La touraille TA2 peut comprendre un convoyeur disposé sous la chambre de ventilation pour recueillir les grains germés lors du déchargement de la cuve par ledit orifice de déchargement.

La cuve CV peut être munie d'un orifice de déchargement OVG. La vidange des grains après l'étape de touraillage peut alors être assurée par l'ouverture de l'orifice de vidange OVG. L'orifice de vidange OVG peut être muni d'une trappe diamétrale ou radiale, d'une pluralité de trappes allongées disposées dans la grille GR au-dessus du convoyeur C80, ou d'une trappe centrale proche du socle SO. L'actionnement du bras BR en rotation et le positionnement des organes de répartition des grains en position de vidange peut progressivement ramener le grain vers la ou les trappes ouvertes et ainsi vider la touraille TA2 en dégageant la grille GR. Le bras BR assure une double fonction de mélange/répartition et de vidange.

La touraille TA2 comprend en outre une pluralité de goulottes GL disposées sensiblement perpendiculairement au transporteur C80. Les goulottes GL sont parallèles les unes aux autres. Les goulottes GL sont jointives bord à bord pour couvrir l'ensemble de la surface de la chambre de ventilation CA de la touraille TA2. Les goulottes GL sont disposées sous la grille GR et débouchent au-dessus de la chaîne transporteuse CN du convoyeur C80. Une goulotte GL peut être formée de façon monobloc en s'étendant d'un bord à l'autre de la charpente intérieure CIN avec une ouverture OVT formée dans le bas de la goulotte GL au droit du convoyeur C80 ou encore être formée en deux parties disjointes au droit du convoyeur C80.

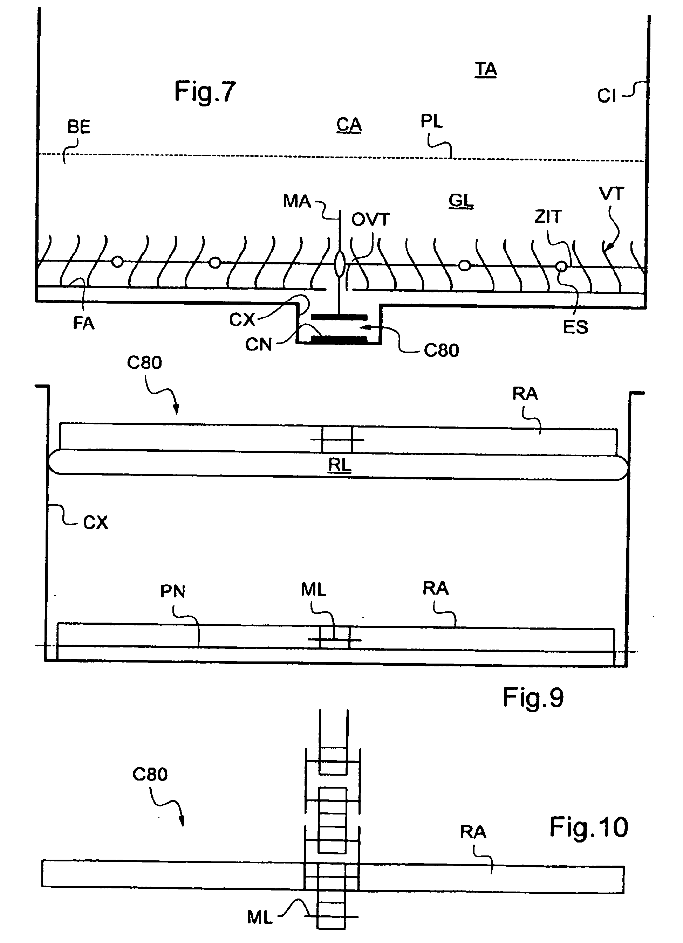

Les goulottes GL reçoivent lors de la circulation de l'air chaud et surtout lors de la vidange des grains vers le convoyeur C80, des débris, poussières et fragments des radicelles résultant du séchage des grains. L'épaisseur de la couche de radicelles peut atteindre plusieurs centimètres. Les goulottes GL peuvent être formées par une tôle en acier inoxydable d'épaisseur comprise entre 1 et 4 mm pliée en forme de Vé à fond arrondi. Les goulottes GL se raccordent à une paroi de la charpente intérieure CIN à l'opposé du convoyeur C80, par exemple par un pan fortement incliné, non représenté, pour favoriser l'évacuation des débris et radicelles. En d'autres termes, les goulottes GL, notamment illustrées figure 7 présentent en coupe transversale un fond FA sensiblement en forme d'arc de cercle et des bords d'extrémités BE sensiblement plans et inclinés vers le bord pour former une surface monotone concave. Les bords d'extrémités BE se raccordent progressivement au fond arqué FA. La pente des bords d'extrémité BE est configurée pour faciliter le glissement des débris et radicelles vers le bas, c'est-à-dire vers la vis VT. L'inclinaison des bords d'extrémité BE par rapport à la verticale peut par exemple être inférieure à 45°, préférablement à 30°. Les bords d'extrémités BE de deux goulottes voisines se raccordent selon une arête vive afin d'éviter que des débris et radicelles n'y restent. Les arêtes vives des bords d'extrémité BE des goulottes GL sont disposées dans un plan sensiblement horizontal.

Les arêtes vives sont recouvertes par un plancher PL ouvert, du genre caillebotis, permettant l'accès et le déplacement d'opérateurs, notamment de contrôle et de maintenance. Les opérateurs peuvent pénétrer dans la chambre de ventilation CA par un sas SA. Le plancher PL peut être réalisé en acier inoxydable. Le plancher PL peut se présenter sous la forme d'une grille à fort taux d'ouverture et à ouverture de dimension nettement supérieure, par exemple d'au moins dix fois, au diamètre des grains. A titre d'exemple, le plancher PL peut comprendre une pluralité de panneaux en tôle présentant des ouvertures carrées de côté compris entre 1 et 4 centimètres, séparées les unes des autres par une épaisseur de tôle comprise entre 1 et 4 mm, la hauteur de la tôle étant comprise entre 3 et 5 cm.

Les goulottes GL sont disposées horizontalement ou avec une faible inclinaison en direction du convoyeur C80. Chaque goulotte GL supporte une vis transporteuse VT, par exemple en forme d'hélice, avec une âme pleine AM, voir figure 6 ou avec une âme creuse. Le diamètre de la vis VT est en concordance avec le diamètre du fond de la goulotte GL afin d'assurer un entraînement efficace à des radicelles et débris tombés dans les goulottes GL. Le diamètre de la vis VT est compris entre 100 mm et 250 mm selon la profondeur de la goulotte correspondante. Les vis VT sont généralement perpendiculaires à la chaîne CN. Les vis transporteuses VT sont pourvues d'éléments de support ES disposés à intervalles réguliers dans une zone d'interruption ZIT de l'hélice. Un élément de support ES peut se présenter sous la forme d'une barre sensiblement horizontale en appui contre les parois opposées de la goulotte GL. Alternativement, un élément de support ES peut être suspendu aux bords vifs supérieurs des goulottes GL ou encore en appui sur le fond arrondi des goulottes, par exemple avec une forme d'accent circonflexe.

Comme on peut le voir sur les figures 7 et 9, le convoyeur C80 est disposé dans un creux CX ménagé dans le sol de la touraille TA2. Les vis VT de part et d'autre du centre de la goulotte GL présentent un pas inversé tout en étant solidaires en rotation. La vis transporteuse VT comprend un mécanisme d'entraînement MA venant en prise avec le convoyeur C80, par exemple engrenant avec la partie supérieure de la chaîne transporteuse CN au droit d'un rouleau de support. Le mécanisme d'entraînement MA peut comprendre une roue dentée. Le mécanisme d'entraînement MA peut comprendre une roue libre. La roue libre assure la transmission du couple dans un sens et transmet un couple nul dans l'autre sens. La chaîne transporteuse CN comprend des maillons de liaison ML et des racleurs RA espacés frottant dans le fond du creux CX formant un canal. Les maillons de liaison ML et les racleurs RA, voir figure 9, peuvent être disposés à la même hauteur, les maillons de liaison ML pouvant être, en partie, équipés de roues intégrées aux maillons pour rouler sur le fond du creux CX. Alternativement, les maillons de liaison ML peuvent être disposés au dessus des racleurs RA dans la partie active et au dessous dans la partie de retour.

Les racleurs RA peuvent munis, tous ou une partie, de patins PN à faible frottement, par exemple en matériau synthétique. Les patins peuvent être disposés sous les racleurs en contact avec le fond du creux CX formant canal d'évacuation. Le retour de la chaîne transporteuse CN s'effectue en partie haute du creux CX avec des rouleaux de support RL disposés à intervalles réguliers. La roue dentée peut engrener avec les maillons ML, de préférence au droit d'un rouleau RL.

La vis transporteuse VT est entraînée dans le sens de rotation correspondant à un déplacement des radicelles et débris vers l'ouverture OVT ménagée dans la goulotte GL et ne peut pas être entraînée dans l'autre sens. Le convoyeur C80 en saillie par ses extrémités au-delà de la touraille TA2, cf figure 5, peut être muni d'un entraînement EN à deux sens de rotation. On peut ainsi, lors de la vidange du grain transporter le grain dans une direction, puis après la vidange du grain, lors du nettoyage de la touraille TA2, transporter les radicelles et débris dans la direction opposée. Les radicelles et débris peuvent ensuite être stockés dans un conteneur approprié, par exemple un silo en vue d'une valorisation éventuelle, par exemple pour la fabrication d'aliments pour les animaux ou encore par combustion en vue de produire de la chaleur, notamment utilisée pour chauffer l'air entrant dans la touraille TA2. On peut ainsi séparer de façon extrêmement simple le produit à valeur ajoutée qu'est le malt, d'une part et le sous-produit, notamment les radicelles de plus faible valeur. Le nettoyage de la touraille TA2 après la phase de touraillage peut ainsi être effectué de façon mécanisée en évitant le pelletage manuel de plusieurs tonnes de débris et radicelles après chaque touraillage. Un simple balayage de la grille GR peut suffire avant la mise en rotation des vis transporteuses VT et du convoyeur C80 dans la direction appropriée.

une chaîne (CN) pourvue de maillons (MA) et de racleurs (RA), et des rouleaux (RL) de support de retour de chaîne, la chaîne (CN) étant en prise avec les vis par l'intermédiaire d'une roue d'entraînement (MA).

L'invention ne se limite pas aux exemples de procédé et installations (ou éléments d'installation) décrits ci-avant, seulement à titre d'exemple, mais elle englobe toutes les variantes que pourra envisager l'homme de l'art dans le cadre des revendications ci-après.

## Revendications

1. Dispositif de touraillage (TA1, TA2) de grains germés comprenant une cuve (CV) à grains germés comportant un fond (FO) muni d'ouvertures d'aération et d'un orifice de déchargement (OVG), une chambre de ventilation (CA) disposée sous la cuve, un transporteur (C80) disposé sous la chambre de ventilation pour recueillir les grains germés lors du déchargement de la cuve par ledit orifice, **caractérisé en ce qu'**il comprend un mécanisme de nettoyage de la chambre de ventilation pourvu de goulottes (GL) sensiblement parallèles formant le fond de la chambre de ventilation, de vis transporteuses (VT) montées dans les goulottes, les vis étant entraînées par le transporteur dans un sens amenant des débris tombés dans une goulotte vers le transporteur, le transporteur étant monté traversant dans la chambre de ventilation pour évacuer lesdits débris lors d'un nettoyage de la chambre de ventilation.

2. Dispositif selon la revendication 1, dans lequel les vis (VT) sont sensiblement perpendiculaires au transporteur (C80).

3. Dispositif selon la revendication 1 ou 2, dans lequel le transporteur (C80) comprend une chaîne (CN) pourvue de maillons (MA) et de racleurs (RA), et des rouleaux (RL) de support de retour de chaîne, la chaîne (CN) étant en prise avec les vis par l'intermédiaire d'une roue d'entraînement (MA).

4. Dispositif selon l'une des revendications précédentes, comprenant un caillebotis (PL) reposant sur les goulottes.

5. Dispositif selon l'une des revendications précédentes, dans lequel les goulottes (GL) présentent une section transversale en forme de Vé à fond arrondi.

6. Dispositif selon l'une des revendications précédentes, dans lequel les goulottes (GL) couvrent sensiblement la surface inférieure de la chambre de ventilation.

7. Dispositif selon l'une des revendications précédentes, dans lequel le transporteur (C80) comprend des paliers d'extrémité disposés hors de la chambre de ventilation (CA).

8. Dispositif selon l'une des revendications précédentes, dans lequel la chambre de ventilation (CA) est circulaire et le transporteur (C80) est disposé diamétralement.

9. Procédé de nettoyage d'une chambre de ventilation (CA) d'un dispositif de touraillage (TA1, TA2) de grains germés comprenant une cuve (CV) à grains germés comportant un fond (FO) muni d'ouvertures d'aération et d'un orifice de déchargement (OVG), la chambre de ventilation étant disposée sous la cuve, un transporteur (C80) disposé sous la chambre de ventilation pour recueillir les grains germés lors du déchargement de la cuve par ledit orifice, dans lequel on actionne des vis transporteuses (VT) montées dans des goulottes parallèles (GL) formant le fond de la chambre de ventilation, par le transporteur dans un sens amenant des débris (DB) tombés dans une goulotte vers le transporteur, le transporteur (C80) étant monté traversant dans la chambre de ventilation (CA) pour évacuer lesdits débris.

10. Procédé selon la revendication 9, dans lequel on actionne le transporteur (C80) dans un sens opposé au sens d'évacuation des grains germés.

## Patentansprüche

1. Darrenanordnung (TA1, TA2) für gekeimtes Korn, mit einem Bottich (CV) für gekeimtes Korn mit einem Boden (FO), der Lüftungsöffnungen und eine Austragöffnung (OVG) enthält, einer unter dem Bottich befindlichen Lüftungskammer (CA), und einer unter der Lüftungskammer befindlichen Transporteinrichtung (C80), um beim Entleeren des Behälters durch die Austragöffnung das gekeimte Korn aufzunehmen, **dadurch gekennzeichnet, dass** sie eine in der Lüftungskammer angeordnete Reinigungsmechanik mit im Wesentlichen parallelen Rinnen (GL), die den Boden der Lüftungskammer bilden, und in den Rinnen angeordnete Transportschnecken (VT) aufweist, wobei die Schnecken von der Transporteinrichtung in einer Richtung mitgenommen werden, in der der in eine Rinne gefallene Abfall zur Transporteinrichtung geführt wird, wobei die Transporteinrichtung die Lüftungskammer durchquerend angeordnet ist, um beim Reinigen der Lüftungskammer den Abfall auszuräumen.

2. Darrenanordnung nach Anspruch 1, bei dem die Schnecken (VT) im Wesentlichen rechtwinklig zur Transporteinrichtung (C80) verlaufen.

3. Darrenanordnung nach Anspruch 1 oder 2, bei der die Transporteinrichtung (C80) eine Kette (CN) mit Kettengliedern (MA) und Abstreifern (RA) sowie Stützrollen (RL) zum Rückführen der Kette aufweist, wobei die Kette (CN) über ein Mitnehmerrad (MA) mit der Schnecke in Verbindung steht.

4. Darrenanordnung nach einem der vorhergehenden Ansprüche, mit einem auf den Rinnen aufliegenden Gitterrost (PL).

5. Darrenanordnung nach einem der vorhergehenden Ansprüche, in der die Rinnen (GL) einen Querschnitt mit der Form eines V bei gerundetem Boden aufweisen.

6. Darrenanordnung nach einem der vorhergehenden Ansprüche, in der die Rinnen (GL) im Wesentlichen die Unterseite der Lüftungskammer überdecken.

7. Darrenanordnung nach einem der vorhergehenden Ansprüche, in der die Transporteinrichtung (C80) außerhalb der Lüftungskammer (CA) liegende endständige Lager aufweist.

8. Darrenanordnung nach einem der vorhergehenden Ansprüche, in der die Lüftungskammer (CA) kreisrund ist und die Transporteinrichtung (C80) diametral verläuft.

9. Verfahren zum Reinigen der Lüftungskammer (CA) einer Darrenanordnung (TA1, TA2) für gekeimtes Korn, mit einem Bottich (CV) für das gekeimte Korn mit einem Lüftungsöffnungen und eine Austragöffnung (OVG) enthaltenden Boden (FO), wobei die Lüftungskammer unter dem Bottich liegt, und mit einer Transporteinrichtung (C80) unter der Lüftungskammer zum Sammeln von gekeimten Korn beim Entleeren des Bottichs durch die genannte Öffnung, bei dem man mittels der Transporteinrichtung Transportschnecken (VT) betätigt, die in den Boden der Lüftungskammer bildenden parallelen Rinnen (GL) gelagert sind, und zwar durch die Transporteinrichtung in einer Richtung, in der in eine Rinne gefallener Abfall (DB) zur Transporteinrichtung geführt wird, wobei die Transporteinrichtung (C80) zum Entfernen des Abfalls in der Lüftungskammer (CA) querverlaufend gelagert ist.

10. Verfahren nach Anspruch 9, bei dem man die Transporteinrichtung (C80) der Entfernungsrichtung des gekeimten Korns entgegengesetzt betätigt.

## Claims

1. Kilning device (TA1, TA2) for sprouted grains comprising a vessel (CV) for sprouted grains having a bottom (FO), with ventilation openings and a discharge orifice (OVG), a ventilation chamber (CA) arranged beneath the vessel, and a carrier (C80) arranged beneath the ventilation chamber to collect the sprouted grains during the unloading of the vessel through the said orifice, **characterised in that** it comprises a mechanism for cleaning the ventilation chamber, provided with substantially parallel channels (GL) forming the bottom of the ventilation chamber, screw conveyors (VT) mounted in the channels, the screws being driven by the carrier in a direction that causes the debris falling into a channel to be transported towards the carrier, the carrier being mounted across the ventilation chamber to evacuate the said debris during the cleaning of the ventilation chamber.

2. Device according to claim 1, wherein the screw conveyors (VT) are substantially perpendicular to the carrier (C80).

3. Device according to claim 1 or 2, in which the carrier (C80) comprises a chain (CN) having links (MA) and scrapers (RA), and rollers (RL) for supporting the return chain, the chain (CN) being engaged with the screw conveyors by means of a drive wheel (MA).

4. Device according to any of the preceding claims comprising a grating (PL) resting on the channels.

5. Device according to any of the preceding claims, in which the channels (GL) have a cross-section in the shape of a V with a rounded bottom.

6. Device according to any of the preceding claims, in which the channels (GL) substantially cover the lower surface of the ventilation chamber.

7. Device according to any of the preceding claims, in which the carrier (C80) comprises end bearings arranged outside the ventilation chamber (CA).

8. Device according to any of the preceding claims, in which the ventilation chamber (CA) is circular and the carrier (C80) is arranged diametrically.

9. Method for cleaning a ventilation chamber (CA) of a kilning device (TA1, TA2) for sprouted grains comprising a vessel (CV) for sprouted grains comprising a bottom (FO) having ventilation openings and a discharge orifice (OVG), the ventilation chamber being arranged beneath the vessel and a carrier (C80) arranged below the ventilation chamber in order to collect the sprouted grains during the unloading of the vessel through the said orifice, in which screw conveyors (VT), arranged in parallel channels (GL) forming the bottom of the ventilation chamber, are activated by the carrier in a direction conveying the debris (DB) falling into a channel towards the carrier, the carrier (C80) being mounted transversely in the ventilation chamber (CA) to remove the said debris.

10. Method according to claim 9, in which the carrier (C80) is activated In a direction opposite to that of the removal of the sprouted grains.
